Europäisches Patentamt

European Patent Office

Office européen des brevets

(11) Veröffentlichungsnummer: **0 154 310**

A1

(12) ## EUROPÄISCHE PATENTANMELDUNG

(21) Anmeldenummer: 85102323.4

(22) Anmeldetag: 01.03.85

(51) Int. Cl.⁴: **B 62 B 15/00**
**B 63 C 5/00**

(30) Priorität: 02.03.84 DE 3407768
14.06.84 DE 3421997
03.11.84 DE 3440243

(43) Veröffentlichungstag der Anmeldung:
11.09.85 Patentblatt 85/37

(84) Benannte Vertragsstaaten:
AT CH DE FR IT LI SE

(71) Anmelder: Florjancic, Peter
Isarstrasse 25
D-8105 Wallgau(DE)

(72) Erfinder: Florjancic, Peter
Isarstrasse 25
D-8105 Wallgau(DE)

(74) Vertreter: Jabbusch, Wolfgang, Dr.
Elisabethstrasse 6
D-2900 Oldenburg(DE)

(54) Schneegleitbrett.

(57) Ein Schneegleitbrett besteht aus einem Formkörper (1), dessen Unterseite eine mittlere Hauptgleitfläche (9) und beiderseits der Hauptgleitfläche seitlich nach oben geneigte Hilfsgleitflächen (14, 15) nat. Auf der Oberseite des Formkörpers befindet sich eine Standfläche für den Benutzer. Die Hauptgleitfläche (9) sorgt für eine gute Gleitfähigkeit in gerader Richtung sowohl bei fester Schneeoberfläche als auch bei Tiefschnee. Die seitlichen Hilfsgleitflächen (14, 15) erlauben ein Steuern durch Gewichtsverlagerung. Der Benutzer steht frei und ohne spezielles Schuhwerk auf der Oberseite des Formkörpers.

Fig. 6

EP 0 154 310 A1

Patentanmeldung


Herr Peter Florjancic, Isarstr. 25, 8109 Wallgau


Schneegleitbrett


Die Erfindung betrifft ein Wintersportgerät zum Befahren von verschneiten Hängen, insbesondere ein gut lenkbares Wintersportgerät.

Ein Wintersportgerät, das sich sehr gut lenken läßt, ist der Abfahrtsski. Mit ihm kann auch am Hang in alle Richtungen gefahren werden. Der Ski hat jedoch den Nachteil, daß zwischen dem Fuß des Benutzers und dem Ski eine sehr steife Verbindung bestehen muß. Diese Bedingung verlangt, daß der Fuß von einem steifen, besonders gestalteten Stiefel umgeben sein muß, der seinerseits unbeweglich in der auf dem Ski montierten Bindung eingespannt sein muß.

Ein Wechsel des Benutzers des Sportgeräts ist daher nicht ohne weiteres möglich. Die obengenannten Forderungen verteuern das Sportgerät erheblich.

Es sind außerdem verschiedene Schlitten, u.a. sogenannte Schalenschlitten, bekannt, die jedoch nur begrenzt lenkbar sind und im wesentlichen nur in der Fallinie eines Hanges gefahren werden können. Diese Schalenschlitten haben z.B. zwei oder mehrere Kufen und können mittels einseitiger Betätigung der auf beiden Seiten angebrachten Bremshebel etwas aus der Fallinie abgelenkt werden.

Der Erfindung liegt die Aufgabe zugrunde, ein Wintersportgerät zu schaffen, das gute Lenkeigenschaften besitzt, jedoch keine starre Verbindung zum Benutzer benötigt und daher eine freizügige Nutzung ermöglicht.

Die Aufgabe wird durch die Merkmale des Hauptanspruchs gelöst.

Die Hauptgleitfläche sorgt für eine gute Gleitfähigkeit in gerader Richtung sowohl bei fester Schneeoberfläche als auch durch den Einlaufbogen bei Tiefschnee. Die seitlichen Hilfsgleitflächen sorgen einerseits dafür, daß ein Hang auch in Querrichtung befahren werden kann, und daß das Schneegleitbrett aus der geraden Richtung nach beiden Seiten durch reine Gewichtsverlagerung abgelenkt werden kann. Der Benutzer steht dabei frei und ohne spezielles Schuhwerk auf der Oberseite des Formkörpers. Die Kanten, die von Haupt- und Hilfsgleitfläche gebildet werden, geben dem Wintersportgerät ein dem Ski ähnliches Fahrverhalten.

Die Unteransprüche beinhalten vorteilhafte Ausgestaltungen des neuartigen Wintersportgerätes.

Durch eine Führungsnut in der Hauptgleitfläche kann die Geradeauslaufstabilität weiter verbessert werden. Insbesondere das Gleiten schräg am Hang wird durch die Wirkung stärker ausgebildeter Kanten an der Hauptgleitfläche verbessert.

Bei reiner Kurvenfahrt kann das Schneegleitbrett auch zeitweilig nur auf einer der Hilfsgleitflächen gleiten. Ein Abrut-

schen kann dabei von Längsnuten oder Längsstegen an der Hilfsgleitfläche verhindert werden. Da die Kanten erhöhter Belastung unterliegen, können sie besonders gegen Verschleiß geschützt werden. Außerdem wird die Richtungsstabilität durch den besseren Kantengriff der schärferen Kanten weiter verbessert. Das Schneegleitbrett kann mit besonderen Bremsflächen versehen sein, die beim normalen Betrieb von der Schneeoberfläche abgehoben ist, beim Anhalten jedoch heruntergedrückt wird.

Wenn das Schneegleitbrett so gestaltet ist, daß es in unbeladenem Zustand auf diese Bremsfläche kippt, dann kann es sich nicht selbständig machen und einen Hang alleine hinuntergleiten. Eine rutschfeste Oberseite des Formkörpers würde dies auch in umgekippter Lage des Schneegleitbretts verhindern.

Die Steuerung des Schneegleitbretts verlangt vom Benutzer eine sorgfältige Gewichtsverlagerung, sowohl nach rechts und links als auch nach hinten oder vorne. Der neutrale Standort kann deshalb auf der Oberfläche markiert sein.

Die Sicherheit wird erhöht, wenn die Standfläche rutschfest gestaltet wird. Sie kann vertieft im Formkörper angeordnet sein. Die Standfestigkeit wird auch durch Haltegurte oder durch zusätzliche Stützen, z.B. in Form von Skistöcken, verbessert. Bei Stürzen oder Zusammenstößen wird die Verletzungsgefahr durch einen rings um das Schneegleitbrett angeordneten Wulst vermindert.

Die Steuerbarkeit des Schneegleitbretts kann noch weiter dadurch verbessert werden, daß das Profil der Hilfsgleitflächen im hinten und/oder vorderen Bereich zur Seitenkante der Hilfsgleitfläche hin gekrümmt ist.

Wird das Schneegleitbrett nun durch außermittige Belastung auf die Hilfsgleitfläche gekippt, so entsteht ein zusätzliches Drehmoment.

Wird die Belastung zusätzlich nach vorne oder hinten verlagert, so hebt sich das parallel zur Hauptgleitfläche verlaufende, geradlinige Profil aus dem Schnee, so daß die Drehung weiter erleichtert wird. Die Drehung des Schneegleitbretts ist bei einer Drehung zum Hang bei der Gewichtsverlagerung nach vorn stärker als bei der Gewichtsverlagerung nach hinten, weil dann das unbelastete Ende vom Hang weg bewegt wird, während im anderen Fall das Schneegleitbrett zum Hang gedreht werden muß.--

Der für die Steuerung durch Belastungsänderungen günstigste Bereich ist auf der Oberseite markiert. Die entsprechenden Flächen können rutschfest gestaltet sein, um die Standsicherheit zu erhöhen.

Ein zusätzlicher Widerstand beim Steuern des Schneegleitbretts kann auch dadurch entstehen, daß sich in der Führungsnut der Hauptgleitfläche der Schnee staut. Dies wird durch eine konische nach hinten offene Gestalt der Führungsnut verhindert.

Zur Verbesserung der Steuerbarkeit des Schneegleitbretts kann noch weiter vorgesehen sein, daß die Hilfsgleitflächen im Querschnitt konvex sind. Durch den konvexen Querschnitt der Hilfsgleitfläche kann der mit der Schneeoberfläche in Berührung befindliche Bereich der Hilfsgleitfläche mehr oder weniger nach außen verlagert werden, wodurch die Drehbewegung des Schneegleitbretts auf unterschiedlich großen Bögen erfolgen kann. Die spitzwinkligen Stege bzw. die durch das sägezahnartige Profil gebildeten Kanten verhindern dabei ein seitliches Abrutschen des Schneegleitbrettes. Die Steuerung des Schneegleitbrettes wird noch dadurch erleichtert, daß die seitliche Neigung des Brettes auf der Hilfsgleitfläche durch Gewichtsverlagerung des Benutzers zusätzlich durch Zugbelastung der Haltegurte unterstützt werden kann. Selbstverständlich verleihen diese Haltegurte dem Benutzer auch einen sicheren Stand auf dem Schneegleitbrett.

Ein zusätzliches Unsicherheitsmoment bestand für den Benutzer im Wechsel des Gleitens von der vorstehenden Hauptgleitfläche auf die Hilfsgleitfläche. Dieses Unsicherheitsmoment wird durch die nach innen versetzte Hauptgleitfläche ausgeschaltet, die einen kontinuierlichen Übergang von der Schußfahrt auf der Hauptgleitfläche zur Bogenfahrt auf der Hilfsgleitfläche erlaubt.

Ausführungsbeispiele der Erfindung, aus denen sich weitere erfinderische Merkmale ergeben, sind in der Zeichnung dargestellt. Es zeigen:

Fig. 1 eine Draufsicht auf ein Schneegleitbrett,

Fig. 2 einen Längsschnitt durch das Schneegleitbrett nach Fig. 1,

Fig. 3 einen Querschnitt nach III - III der Fig. 1,

Fig. 4 die teilweise Darstellung eines veränderten Querschnitts,

Fig. 5 a,b,c die Funktion des erfindungsgemäßen Geräts,

Fig. 6 die Unterseite einer anderen Ausführungsform eines Schneegleitbretts,

Fig. 7 die Oberseite des Schneegleitbretts gemäß Fig. 6,

Fig. 8 einen Schnitt durch das Schneegleitbrett gemäß Fig. 6,

Fig. 9 eine perspektivische Ansicht einer weiteren Ausführungsform des Schneegleitbrettes,

Fig. 10 einen Querschnitt durch das Schneegleitbrett gemäß Fig. 3 und

Fig. 11 einen Querschnitt durch ein Schneegleitbrett gemäß Fig. 3 mit einem weiteren Profil.

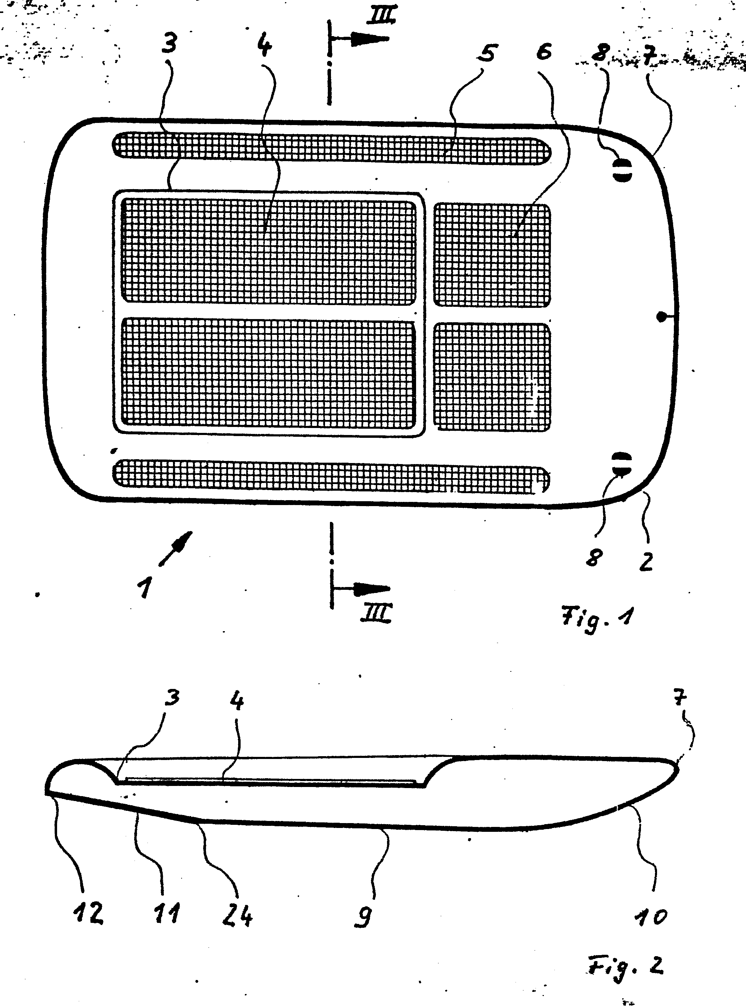

In der Fig. 1 ist der abgerundete Grundriß 2 des Formkörpers 1 zu erkennen. In der Oberseite ist eine Vertiefung 3 vorgesehen, deren Boden mit einem rutschfesten Belag 4 versehen ist. Auch auf der übrigen Oberfläche an der Oberseite des Formkörpers 1 sind geriffelte Bereiche 5, 6 vorgesehen. Kurz hinter der Vorderkante 7 des Formkörpers 1 sind zwei Ösen 8 zur Befestigung der Haltegurte angebracht.

Im Längsschnitt durch den Formkörper 1 der Fig. 2 ist die Vertiefung 3 für die Standfläche und deren Belag 4 deutlich zu erkennen. Der Längsschnitt zeigt auf der Unterseite des Formkörpers 1 die Hauptgleitfläche 9 mit dem zur Vorderkante 7 bogenförmig ansteigenden Bereich 10 und die Schräge 11 zur Hinterkante 12. Bei dem Formkörper 1 kann es sich z.B. um einen verrippten oder ausgeschäumten Kunststoffhohlkörper handeln.

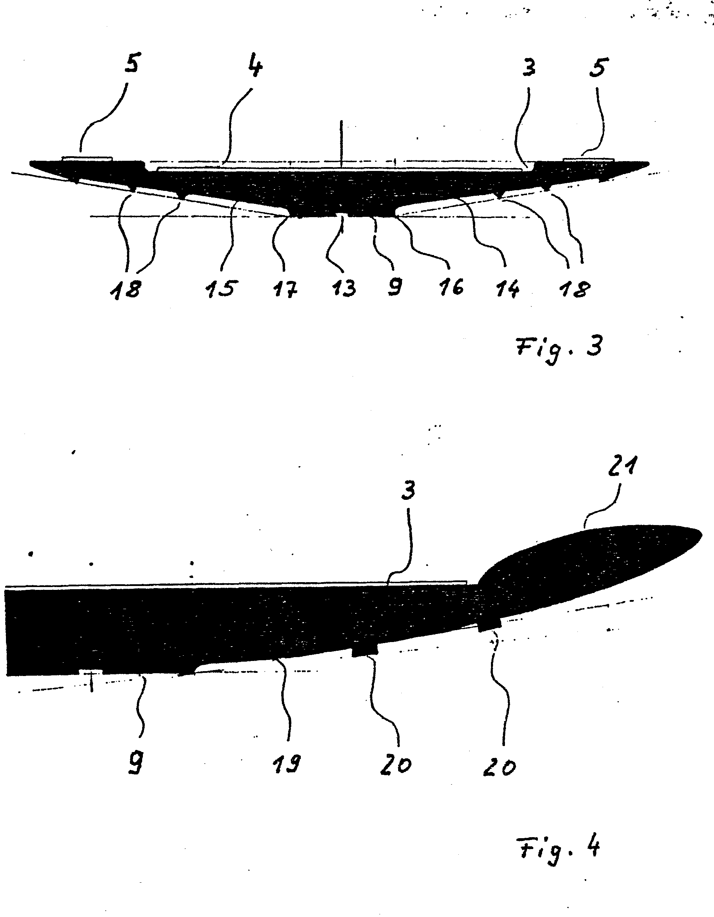

Fig. 3 zeigt einen Querschnitt durch den Formkörper 1 in Höhe der Vertiefung 3. An die Hauptgleitfläche 9, die mit einer mittigen Nut 13 versehen ist, schließen sich die geneigten Hilfsgleitflächen 14, 15 an. Die ebenen Hilfsgleitflächen 14, 15 sind hier geringfügig zurückgesetzt und bilden mit der Hauptgleitfläche 9 daher ausgeprägte Kanten 16, 17. Außerdem verlaufen über die gesamte Länge der Hilfsgleitflächen Führungsstege 18. Auf der Oberfläche sind wieder die Beläge 4, 5 erkennbar.

Fig. 4 zeigt eine andere Ausführungsform des Querschnitts des Formkörpers 1. An die Hauptgleitfläche 9 schließt sich eine gewölbte Hilfsgleitfläche 19 an. Wegen der Symmetrie des Querschnitts ist nur die eine Hilfsgleitfläche 19 dargestellt. Auf ihr sind wie in Fig. 3 wieder zwei Führungsstege 20 angeordnet, die rechteckigen Querschnitt haben. Die Hilfsgleitfläche geht in einen Wulst 21 über, der den Rand des Formkörpers 1 bildet. Durch den Wulst 21 ergibt sich die Vertiefung 3 der Standfläche.

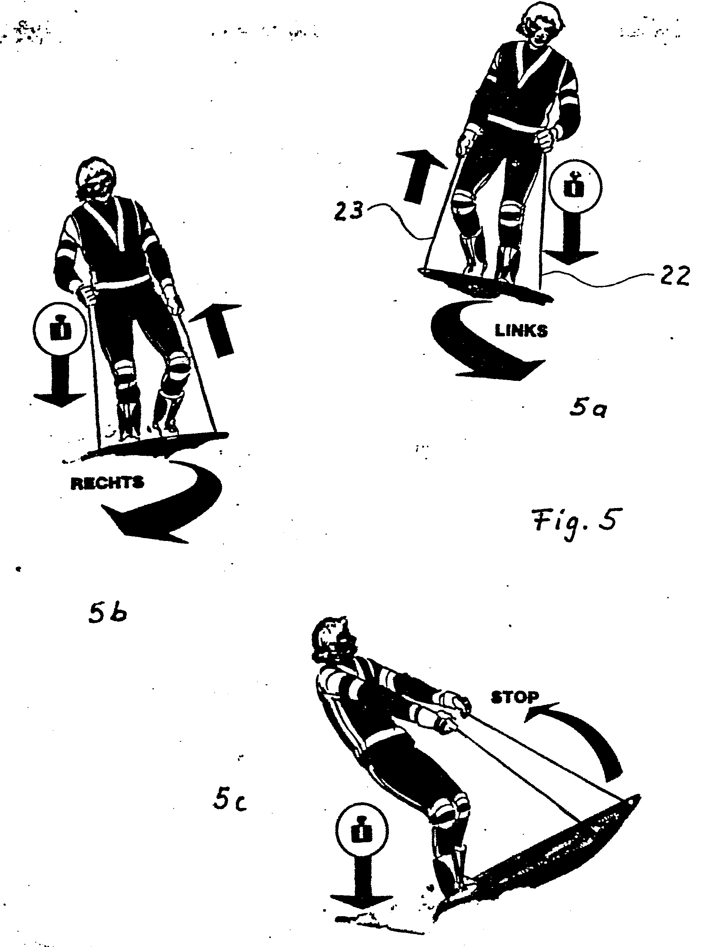

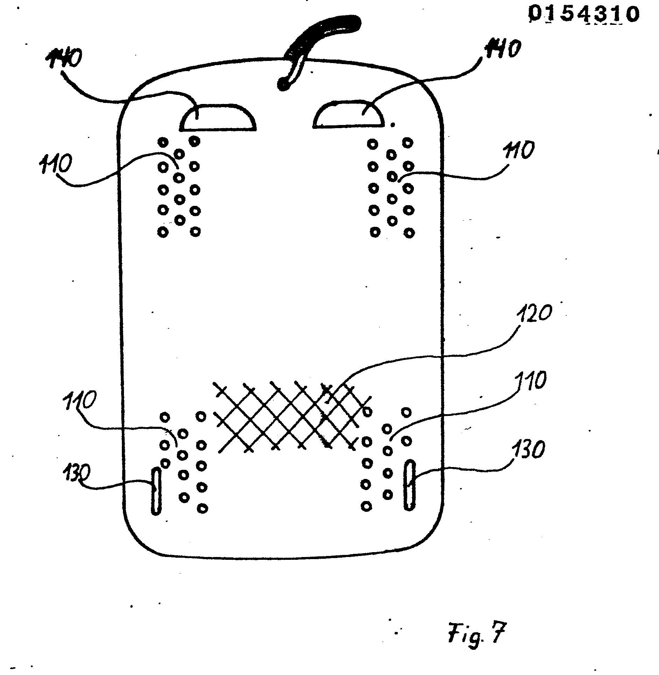

Anhand der Fig. 5 soll die Funktion des Wintersportgeräts näher erläutert werden. Der Benutzer steht etwa in der Mitte der Vertiefung 3 über der Hauptgleitfläche 9. Bei normaler Schußfahrt ist das Körpergewicht so verteilt, daß das Schneegleitbrett lediglich mit seiner Hauptgleitfläche 9 auf dem Schnee aufliegt. Durch die Kanten 16, 17 und die Führungsnut 13 wird ein stabiler Geradeauslauf erreicht. Zum Einhalten des Gleichgewichtszustandes und zur Verbesserung der Standfestigkeit sind seitlich vorn am Schneegleitbrett Skistöcke 22, 23 eingesetzt, auf die sich der Benutzer stützen kann.

Eine Kurvenfahrt wird durch eine reine Gewichtsverlagerung hervorgerufen (Fig. 5a,b).

Durch die Gewichtsverlagerung berührt die Hilfsgleitfläche den Schnee und erzeugt dabei ein Moment um eine Senkrechte auf die Längsachse des Schneegleitbretts. Ein Abrutschen des Schneegleitbrettes quer zur Längsachse wird dabei durch die Stege 18, 20 verhindert.

Die Geschwindigkeit kann verringert oder die Fahrt ganz abgebremst werden, wenn der Benutzer sein Gewicht nach hinten verlagert. Dadurch kippt das Schneegleitbrett auf die schräge Fläche 11 und wird abgebremst. Diese Funktion wird durch eine entsprechende Gestaltung der Oberfläche der Schräge weiter verbessert.

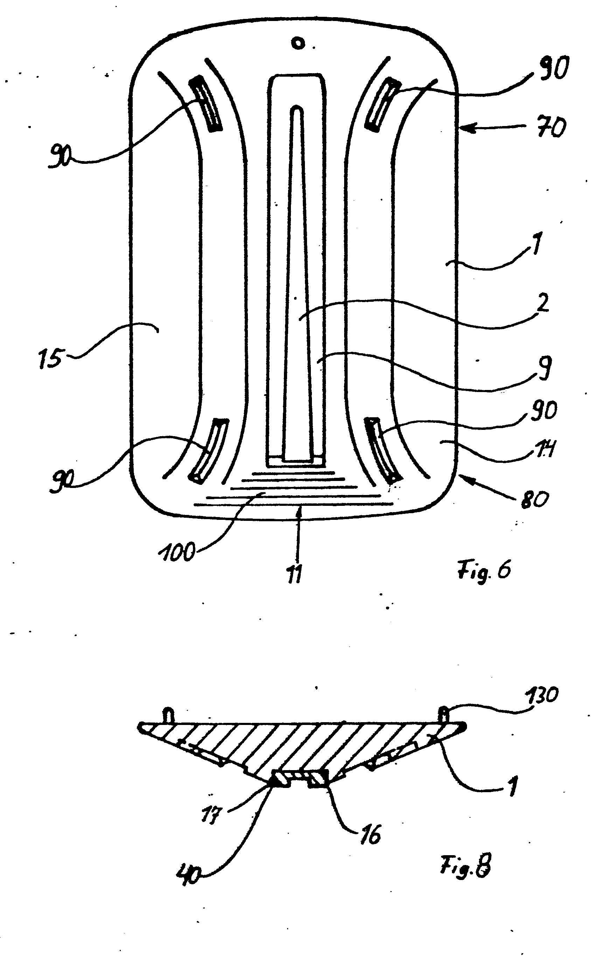

Die Unterseite des Schneegleitbretts nach Fig. 6 zeigt die in Längsrichtung verlaufende Hauptgleitfläche 9, mit der sich hier nach hinten erweiternden Nut 13, die hier aus einem in den Formkörper 1 eingelassenen auswechselbaren Einsatz 40 besteht. Rechts und links schließen sich die profilierten Hilfsgleitflächen 14, 15 an, deren Profil einen gekrümmten Einlaufbereich 70 und Auslaufbereich 80 hat. In diesem Bereich sind zusätzliche Stege 90 angeordnet, die die Wirkung der Krümmung des Profils unterstützen. Nach hinten schließt sich an die Hauptgleitfläche wieder die Schräge 11 mit einer Bremsfläche 100 an.

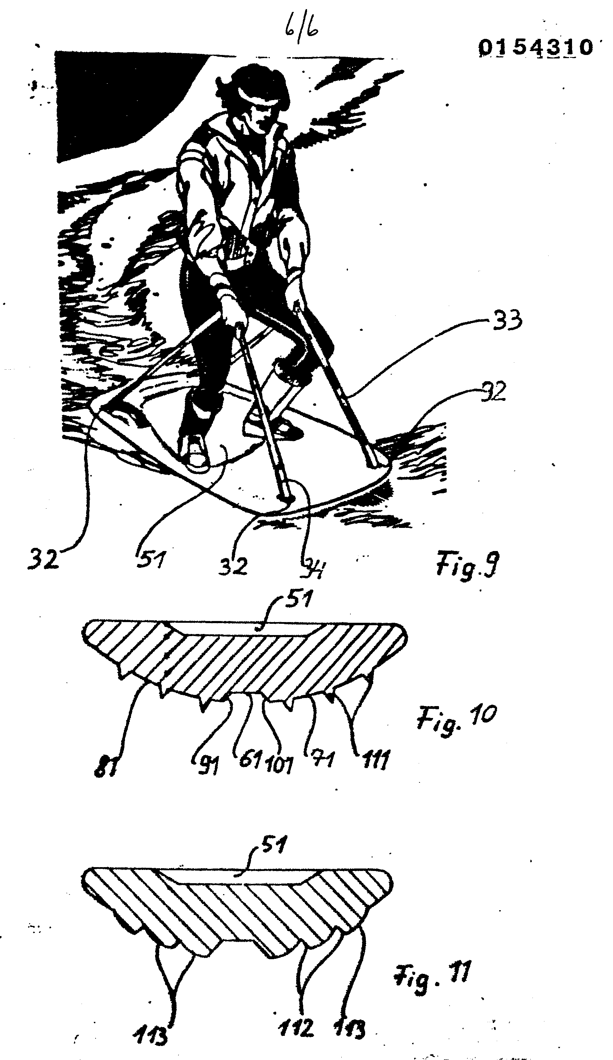

Fig. 7 zeigt die Oberseite des Schneegleitbretts der Fig. 6. Über den gekrümmten Profilbereichen der Hilfsgleitflächen sind die Standflächen 110 durch eine geeignete Oberflächenstruktur rutschfest gestaltet. Die Hauptstandfläche 120 bei Geradeausfahrt ist zwischen den hinteren Belastungsstandflächen 110 angedeutet.

Das Schneegleitbrett ist mit Halte- und Transportgriffen 130 ausgestattet. Da es auch sitzend benutzt werden kann, sind vorne Fußstützen 140 eingelassen, um dem Benutzer einen festen Halt zu geben.

Der Querschnitt des Schneegleitbretts zeigt, daß der Einsatz 40 im Formkörper 1 so angeordnet ist, daß er wieder rechtwinklig ausgeprägte, der Führung dienende Kanten 16 und 17 bildet. Der Einsatz 40 kann gegen andersgestaltete Einsätze ausgetauscht werden, wenn das Schneegleitbrett z.B. auf Eis, im Tiefschnee oder auf anderem Untergrund benutzt werden soll.

In Fig. 9 ist das Schneegleitbrett in Benutzung dargestellt. In den vorderen und hinteren Ecken des Schneegleitbretts sind die Befestigungsösen 32 für zwei Haltegurte 33, 34 vorgesehen. In die Oberfläche des Schneegleitbretts ist eine rutschfeste vertiefte Standfläche 51 für den Benutzer eingelassen.

Im Querschnitt der Fig. 10 ist die Vertiefung 51 erkennbar. Die Hauptgleitfläche 61 ist gegenüber den seitlichen Hilfsgleitflächen 71, 81 versenkt angeordnet.

Die Geradeauslaufeigenschaften werden durch die Übergangsflächen 91, 101 gewährleistet. Die Hilfsgleitflächen 71, 81 sind zu den Außenkanten hin nach oben gewölbt.

Aus den Hilfsgleitflächen 71, 81 stehen mehrere spitzwinkelige Stege 111 hervor, die im vorderen und hinteren Bereich des Schneegleitbrettes zur seitlichen Außenkante hin gekrümmt sind. Die Krümmung der Stege 111 kann sich mit zunehmendem Abstand von der Längsachse verstärken.

Fig. 11 zeigt ein weiteres, für die Aufgabe gut geeignetes Profil, das sägezahnartig ausgebildet sein kann. Die nach innen weisenden Schrägflanken 112 sind dabei steiler als die zur Außenkante weisenden Flanken 113. Die Flanken 113 können bogenförmig sein, um das allmähliche Kippen des Schneegleitbretts 1 zu erleichtern.

Das Schneegleitbrett wird, wie bereits beschrieben, in erster Linie durch die Verlagerung des Körpergewichts gesteuert. Eine Verlagerung des Gewichts zu einer Seite läßt eine der Hilfsgleitflächen 71, 81 stärker in den Schnee eintauchen, wodurch schon alleine eine Drehung des Schneegleitbrettes hervorgerufen wird. Die Drehbewegung des Schneegleitbrettes wird dadurch verstärkt, daß die Profile und Stege im vorderen und hinteren Bereich des Schneegleitbrettes zur Seitenkante hin gekrümmt sind. Zur Beeinflussung des Fahrbogens kommt es nun auf eine sorgfältige Dosierung des Neigungswinkels an. Diese fein-

0154310

fühlige Einstellung wird durch den Armzug an den Halteseilen 33 bzw. 34 unterstützt. Gleichzeitig gewährleisten die Haltegurte dem Benutzer einen festen Stand, selbst wenn das Schneegleitbrett bei der Fahrt über eine Bodenwelle den Bodenkontakt verlieren sollte.

1. Schneegleitbrett,

g e k e n n z e i c h n e t   d u r c h

einen Formkörper (1) auf der Unterseite mit einer mittleren, ebenen Hauptgleitfläche (9), die zur Vorderkante (7) des Formkörpers hin bogenförmig ansteigt, und beiderseits der Hauptgleitfläche (9) seitlich nach oben geneigten Hilfsgleitflächen (14, 15).

2. Schneegleitbrett nach Anspruch 1, dadurch gekennzeichnet, daß in der Hauptgleitfläche (9) eine Führungsnut (13) vorgesehen ist.

3. Schneegleitbrett nach Anspruch 1, dadurch gekennzeichnet, daß die Hauptgleitfläche (9) und die Hilfsgleitflächen (14, 15) rechtwinklige Führungskanten (16, 17) bilden.

4. Schneegleitbrett nach Anspruch 1, dadurch gekennzeichnet, daß die Hilfsgleitflächen (14, 15) in Längsrichtung profiliert sind.

5. Schneegleitbrett nach Anspruch 1 und 4, gekennzeichnet durch einen oder mehrere Führungsstege (18, 20) und/oder Führungsnuten an den Hilfsgleitflächen (14, 15) in Längsrichtung derselben.

6. Schneegleitbrett nach Anspruch 1 und 3, dadurch gekennzeichnet, daß die Führungskanten (16, 17) aus verschleißfestem Material bestehen.

7. Schneegleitbrett nach Anspruch 1, 3 und 6, dadurch gekennzeichnet, daß die Führungskanten (16, 17) mit Stahlleisten armiert sind.

8. Schneegleitbrett nach Anspruch 1, dadurch gekennzeichnet, daß die Neigung der Hilfsgleitflächen (14, 15) gegenüber der Hauptgleitfläche < 30° ist.

9. Schneegleitbrett nach Anspruch 1, gekennzeichnet durch eine zum hinteren Ende des Formkörpers (1) ansteigende Schräge (11), die an die Gleitflächen (9, 14, 15) anschließt.

10. Schneegleitbrett nach Anspruch 1, dadurch gekennzeichnet, daß die Schräge (11) gleithemmend ausgebildet ist.

11. Schneegleitbrett nach Anspruch 1, dadurch gekennzeichnet, daß die Schräge (11) mit nach vorn weisenden Schuppen belegt ist.

12. Schneegleitbrett nach Anspruch 1 und 10, dadurch gekennzeichnet, daß der Schwerpunkt des Formkörpers (1) hinter der Verbindungskante (24) von Hauptgleitfläche (9) und Schräge (11) liegt.

13. Schneegleitbrett nach Anspruch 9, dadurch gekennzeichnet, daß am oberen Ende (12) der Schräge (11) Bremskrallen angeordnet sind.

14. Schneegleitbrett nach Anspruch 1, dadurch gekennzeichnet, daß auf der Oberseite des Formkörpers (1) eine Standfläche für den Benutzer markiert ist.

15. Schneegleitbrett nach Anspruch 14, dadurch gekennzeichnet, daß die Standfläche durch eine Vertiefung (3) in der Oberseite des Formkörpers (1) gebildet wird.

16. Schneegleitbrett nach Anspruch 14, dadurch gekennzeichnet, daß die Standfläche rutschfest ausgebildet ist.

17. Schneegleitbrett nach Anspruch 14, dadurch gekennzeichnet, daß die Standfläche aus einem Rost besteht.

18. Schneegleitbrett nach Anspruch 1, dadurch gekennzeichnet, daß die Oberseite des Formkörpers (1) zumindest in Bereichen nichtrutschend gestaltet ist.

19. Schneegleitbrett nach Anspruch 1, dadurch gekennzeichnet, daß am vorderen Ende des Formkörpers (1) Haltegurte befestigt sind.

- 4 -

20. Schneegleitbrett nach Anspruch 1, dadurch gekennzeichnet, daß am vorderen Ende des Formkörpers (1) auf der Oberfläche Aufnahmen für die Spitzen von Skistöcken (22, 23) vorgesehen sind.

21. Schneegleitbrett nach Anspruch 1, dadurch gekennzeichnet, daß die Oberseite des Formkörpers und die Gleitflächen (9, 19) durch einen Wulst (21) verbunden sind.

22. Schneegleitbrett nach einem der vorhergehenden Ansprüche, insbesondere nach Anspruch 1, dadurch gekennzeichnet, daß das Profil der Hilfsgleitflächen im hinteren und/oder vorderen Bereich zur Seitenkante der Hilfsgleitfläche hin gekrümmt ist.

23. Schneegleitbrett nach Anspruch 22, dadurch gekennzeichnet, daß im gekrümmten Profilbereich entsprechend gekrümmte Stege (90) angeordnet sind.

24. Schneegleitbrett nach Anspruch 23, dadurch gekennzeichnet, daß die Stege (90) ein spitzwinkliges Profil haben.

25. Schneegleitbrett nach Anspruch 22, dadurch gekennzeichnet, daß über den gekrümmten Profilbereichen auf der Oberseite des Formkörpers (1) zusätzliche Standflächen (110) ausgebildet sind.

26. Schneegleitbrett nach Anspruch 22, dadurch gekennzeichnet, daß die in der Hauptgleitfläche (9) vorgesehene Führungsnut (13) sich zum hinteren Ende des Formkörpers (1) hin erweitert.

27. Schneegleitbrett nach Anspruch 22, dadurch gekennzeichnet, daß die Hauptgleitfläche (9) einen auswechselbaren Einsatz (40) aus verschleißfestem Material enthält.

28. Schneegleitbrett nach einem der vorhergehenden Ansprüche, insbesondere nach Anspruch 1, dadurch gekennzeichnet, daß die Hilfsgleitflächen (71, 81) im Querschnitt konvex sind.

29. Schneegleitbrett nach Anspruch 28, dadurch gekennzeichnet, daß auf den konvexen Hilfsgleitflächen (71, 81) in Längsrichtung Stege (111) mit spitzwinkligem Profil verlaufen.

30. Schneegleitbrett nach Anspruch 1, dadurch gekennzeichnet, daß die Hilfsgleitflächen (71, 81) ein sägezahnartiges Profil (112, 113) aufweisen.

31. Schneegleitbrett nach Anspruch 28, dadurch gekennzeichnet, daß es mindestens zwei Haltegurte (33, 34) aufweist, deren Befestigungspunkte sich vorne und hinten, rechts und links der Standfläche (51) befinden.

32. Schneegleitbrett nach Anspruch 28, dadurch gekennzeichnet, daß die mittlere ebene Hauptgleitfläche (61) gegenüber
den seitlichen Hilfsgleitflächen (71, 81) zurückgesetzt ist.

1/6

0154310

Fig. 1

Fig. 2

Fig. 3

Fig. 4

RECHTS

LINKS

23

22

5a

Fig. 5

5b

STOP

5c

4/6

0154310

Fig. 7

Fig. 6

Fig. 8

6/6

0154310

Fig. 9

Fig. 10

Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 437 850   (DAN VICAS)<br><br>* Abbildungen; Seite 2, Zeilen 11-37 * | 1,2,4, 5,9,10 ,14,16 ,18,22 ,28,29 | B 62 B   15/00<br>A 63 C    5/00 |
| Y | | 15,27, 31 | |
| Y | DE-A-2 749 027  (SINGER)<br>* Abbildungen  1,2; Seite 8, Zeilen 8-14 * | 15 | |
| Y | US-A-3 807 749  (KUNSELMAN)<br>* Abbildung 1; Zusammenfassung * | 31 | **RECHERCHIERTE SACHGEBIETE (Int. Cl.4)** |
| X | FR-A-2 409 773  (MILLET)<br><br>* Abbildungen 1-5,7-9; Seite 3, Zeile 11 - Seite 4, Zeile 7; Seite 4, Zeilen 22-35; Seite 5, Zeilen 21-30 * | 1-3,6, 7,28 | B 62 B<br>A 63 C |
| Y | | 27 | |

--- -/-

Der vorliegende Recherchenbericht wurde für alle Patentansprüche erstellt.

| Recherchenort<br>DEN HAAG | Abschlußdatum der Recherche<br>30-05-1985 | Prüfer<br>DUBOIS B.F.J. |
|---|---|---|

Europäisches
Patentamt

EUROPÄISCHER RECHERCHENBERICHT

0154310

Nummer der Anmeldung

EP 85 10 2323

| | EINSCHLÄGIGE DOKUMENTE | | Seite 2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE-A-2 557 275 (STUMM)<br><br>* Abbildungen; Seite 9, Zeile 21 - Seite 11, Zeile 13; Seite 13, Zeilen 1-6 * | 1-8,19 ,28,30 ,32 | |
| Y | | 22 | |
| | --- | | |
| Y | DE-A-2 647 124 (STUMM)<br>* Ansprüche 1,2,5; Abbildungen 3,6,7 * | 22 | |
| | --- | | |
| X | FR-A-2 383 679<br>(WIDERMANN-RIEDEL)<br><br>* Abbildungen 1,4,6-9,12; Seite 1, Zeilen 7-33; Seite 2, Zeilen 3-9; Seite 3, Zeilen 17-23; Seite 5, Zeilen 10-37; Seite 6, Zeilen 15-26; Seite 7, Zeilen 3-7, 37-40 * | 1-7,14 ,16-18 ,22-24 ,28,29 | RECHERCHIERTE SACHGEBIETE (Int. Cl.4) |
| A | | 10 | |
| | --- | | |
| X | FR-A-2 435 956 (GOY)<br><br>* Abbildungen; Seite 2, Zeile 33 - Seite 3, Zeile 12; Seite 3, Zeilen 19-30 * | 1-9,13 ,22 | |
| | --- -/- | | |

Der vorliegende Recherchenbericht wurde für alle Patentansprüche erstellt.

| Recherchenort<br>DEN HAAG | Abschlußdatum der Recherche<br>30-05-1985 | Prüfer<br>DUBOIS B.F.J. |
|---|---|---|

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| X | DE-A-2 824 997 (PRÖBSTL) <br><br> * Abbildungen 1-4,7; Seite 9, Zeile 24 - Seite 10, Zeile 2; Seite 11, Zeilen 3-23; Seite 13, Zeilen 1-10; Seite 14, Zeilen 15-24 * <br><br> ----- | 1-7,21 ,22,26 | |

**RECHERCHIERTE SACHGEBIETE (Int. Cl 4)**

Der vorliegende Recherchenbericht wurde für alle Patentansprüche erstellt.

| Recherchenort DEN HAAG | Abschlußdatum der Recherche 30-05-1985 | Prüfer DUBOIS B.F.J. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82